# EUROPÄISCHE PATENTANMELDUNG

(11) **EP 1 249 728 A2**
(43) Veröffentlichungstag der Anmeldung: **16.10.2002**
(21) Anmeldenummer: 01129614.2
(22) Anmeldetag: 12.12.2001
(51) Int. Cl.: G02F 1/1333

(54) **Flüssigkristallanzeigevorrichtung**

(30) Priorität: 12.04.2001 DE 20106574 U
(71) Anmelder: Element Displays Dr. Wiemer GmbH, 89134 Blaustein (DE)
(72) Erfinder: Wiemer, Wolfram, Dr., 89134 Blaustein (DE)
(74) Vertreter: Fleck, Hermann-Josef, Dr.-Ing.

(57) **Zusammenfassung**

Die Erfindung bezieht sich auf eine im spannungslosen Zustand helle Flüssigkristallanzeigevorrichtung (1) mit einer in einer aktiven Zone (2) zwischen Substraten eingebrachten Flüssigkristallschicht, wobei die Substrate außen jeweils mit in einer Anordnung für die spannungslose Hellanzeige ausgerichteten Polfiltern abgedeckt sind und auf ihrer Innenseite mit elektrisch isolierenden Trennlinien (5) voneinander getrennte Segmente (2.2) von Flächenelektroden tragen, die mit nach außen führenden Anschlussleitungen verbunden sind, und wobei auf der Substratinnenseite eine Maskierung für bei Dunkelsteuerung ansonsten hell bleibende Bereiche vorgesehen ist. Vorteile für den Aufbau und die Qualität der Anzeige ergeben sich dadurch, dass die aktive Zone (2) umfangsseitig mit schwarz erscheinenden Kleberstreifen (4) zwischen den Substraten umschlossen ist und dass die Maskierung zumindest in ansonsten aus üblichem Betrachtungsabstand bei Dunkelsteuerung deutlich in Erscheinung tretenden Hellbereichen mittels weiterer Kleberstreifen (4') hergestellt ist (Fig. 1).

## Beschreibung

Die Erfindung bezieht sich auf eine Flüssigkristallanzeigevorrichtung, die im spannungslosen Zustand hell ist, einer in einer aktiven Zone zwischen Substraten eingebrachten Flüssigkristallschicht, wobei die Substrate außen jeweils mit in einer Anordnung für die spannungslos hellea Anzeige ausgerichteten Polfiltern abgedeckt sind und auf ihrer Innenseite mit elektrisch isolierenden Trennlinien voneinander getrennte Segmente von Flächenelektroden tragen, die mit nach außen führenden Anschlussleitungen verbunden sind, und wobei auf der Substratinnenseite eine Maskierung für bei Dunkelsteuerung ansonsten hell bleibende Bereiche vorgesehen ist.

Eine derartige Flüssigkristallanzeigevorrichtung ist in der US 4,952,030 angegeben. Derartige Flüssigkristallanzeigevorrichtungen zum Erzeugen von im spannungslosen Zustand hellen Anzeigen besitzen gegenüber im spannungslosen Zustand dunklen Anzeigen den Vorteil, dass die dunklen angesteuerten Bereiche der Zellen nicht farbig erscheinen, sondern richtig schwarz sind. Die hellen nicht angesteuerten Bereiche sind für Licht aus allen Richtungen gleich hell, das Auflicht wird also besser ausgenutzt als bei spannungslos dunklen Zellen. Auch können die spannungslos hellen Anzeigen deutlich kostengünstiger hergestellt werden, u.a. weil der dunkle Hintergrund in Abhängigkeit vom Blickwinkel nicht farbig erscheint und keine aufwändigen Gegenmaßnahmen zum Erreichen einer gleichmäßigen Farbe ergriffen werden müssen. Bei der spannungslos hellen Zelle sind die optischen Achsen der beiden Polarisationsfolien gekreuzt. Die nicht angesteuerten Bereiche sind immer hell, die angesteuerten Segmente dagegen schwarz. Damit erscheint auch der Kleberandbereich, der den Flüssigkristallbereich einschließt, schwarz. Die genannte Druckschrift zeigt Lösungsmöglichkeiten, um bei spannungslos hellen Anzeigen helle Segmente auf dunklem Hintergrund bei gutem Kontrast und insbesondere auch schrägem Blickwinkel beispielsweise aus einem unteren Halbraum darstellen zu können. Hierzu ist ein Verdrehwinkel der Flüssigkristallschicht < 90°, insbesondere 50° bis 80° angegeben. Jedoch besteht bei derartigen spannungslos hellen Anzeigen eine Schwierigkeit darin, die hellen nicht angesteuerten Bereiche dunkel erscheinen zu lassen. Hierzu werden die hellen Bereiche mittels einer lichtabsorbierenden Maske abgedeckt, die zur Vermeidung von Parallaxen meist auf der Innenseite des Substrats angeordnet wird, wie in der US 4,952,030 ausgeführt. Die Maskierung bedeutet einen teuren, aufwändigen zusätzlichen Fertigungsschrift.

Eine weitere Flüssigkristallanzeigevorrichtung zum Erzeugen von im spannungslosen Zustand hellen Anzeigen ist in der DE 37 82 916 A1 gezeigt, wobei ebenfalls ein Verdrehwinkel der Flüssigkristallschicht < 90° angegeben ist, um günstige Beobachtungen aus schräger Richtung gegenüber der Normalen zu erreichen.

Der Erfindung liegt die Aufgabe zugrunde, eine Flüssigkristallanzeigevorrichtung bereit zu stellen, die bei vereinfachtem Aufbau möglichst gute Anzeigeeigenschaften insbesondere auch bei relativ großen Anzeigen ergibt.

Diese Aufgabe wird mit den Merkmalen des Anspruches 1 gelöst. Hiernach ist vorgesehen, dass die aktive Zone umfangsseitig mit schwarz erscheinenden Kleberstreifen zwischen den Substraten umschlossen ist und dass die Maskierung zumindest in ansonsten aus üblichem Betrachtungsabstand bei Dunkelsteuerung deutlich in Erscheinung tretenden Hellbereichen mittels weiterer Kleberstreifen hergestellt ist.

Mit diesen Maßnahmen wird die Maskierung mit demselben Material und im selben Fertigungsschritt wie die Herstellung der Umrandung der aktiven Zone und die Verklebung der beiden Substrate bewirkt. Dadurch ergibt sich eine deutliche Reduzierung der Produktionskosten bei stabilem Aufbau der Anzeigevorrichtung. Bei der Lösung wird ausgenutzt, dass bei spannungslos hellen Anzeigen alle Bereiche, in denen sich kein Flüssigkristall befindet, schwarz erscheinen; dies gilt auch für die Bereiche, in denen sich der Kleber befindet. Durch Aufbringen mittels Kleberdruckes kann der Kleber exakt und auf einfach vorgebbare Weise in zu maskierenden Bereichen innerhalb der Zelle bei der Fertigung aufgebracht werden. Es ergibt sich eine störungsfreie Anzeige, die in Verbindung mit einem Flüssigkristall mit Verdrehwinkel < 90° bevorzugt auch für eine schräge Beobachtung, beispielsweise aus einem unteren Halbraum vorteilhaft ist.

Eine vorteilhafte Ausgestaltung für den Aufbau und die Darstellung der Anzeige besteht darin, dass die weiteren Kleberstreifen zumindest im Bereich der Anschlussleitungen angeordnet sind.

Weitere vorteilhafte Maßnahmen für den Aufbau und die Darstellung der Anzeige ergeben sich dadurch, dass die aktive Zone rechteckförmige oder quadratische Form besitzt und die weiteren Kleberstreifen durchgehend parallel zu einer Außenseite in gleichen Abständen zum Bilden zeilenförmiger oder spaltenförmiger Teilbereiche angeordnet sind. Eine günstige Ausgestaltung besteht dabei darin, dass mehrere Anschlussleitungen gemeinsam im Bereich der weiteren Kleberstreifen geführt sind.

Eine vorteilhafte Anordnung wird weiterhin dadurch erreicht, dass die Zeilen oder Spalten in mehrere gleich große quadratische oder rechteckförmige Untergruppen von Segmenten mit jeweils mindestens einem Segment unterteilt sind.

Für eine einfache Leitungsführung und damit den einfachen Aufbau sind weiterhin die Maßnahmen günstig, dass jedes Segment an einen Kleberstreifen oder weiteren Kleberstreifen, die Anschlussleitungen abdecken, angrenzt.

Zu einer einfachen Herstellung tragen die Maßnahmen bei, dass eine Umfangsseite zum Einfüllen des Flüssigkristalls im Bereich eines senkrecht darauf stoßenden Kleberstreifens unterbrochen ist, wobei eine so gebildete Einfüllöffnung jeweils zu zwei nebeneinander liegenden Teilbereichen führt.

Die Erfindung wird nachfolgend anhand von Ausführungsbeispielen unter Bezugnahme auf die Zeichnungen näher erläutert. Es zeigen:
- Fig. 1: eine schematische Darstellung einer Flüssigkristallanzeigevorrichtung in Vorderansicht mit mehreren Anzeigesegmenten und aufgebrachtem Kleberdruck und
- Fig. 2: eine schematische Darstellung der Flüssigkristallanzeigevorrichtung mit dem Kleberdruck nach Fig. 1.

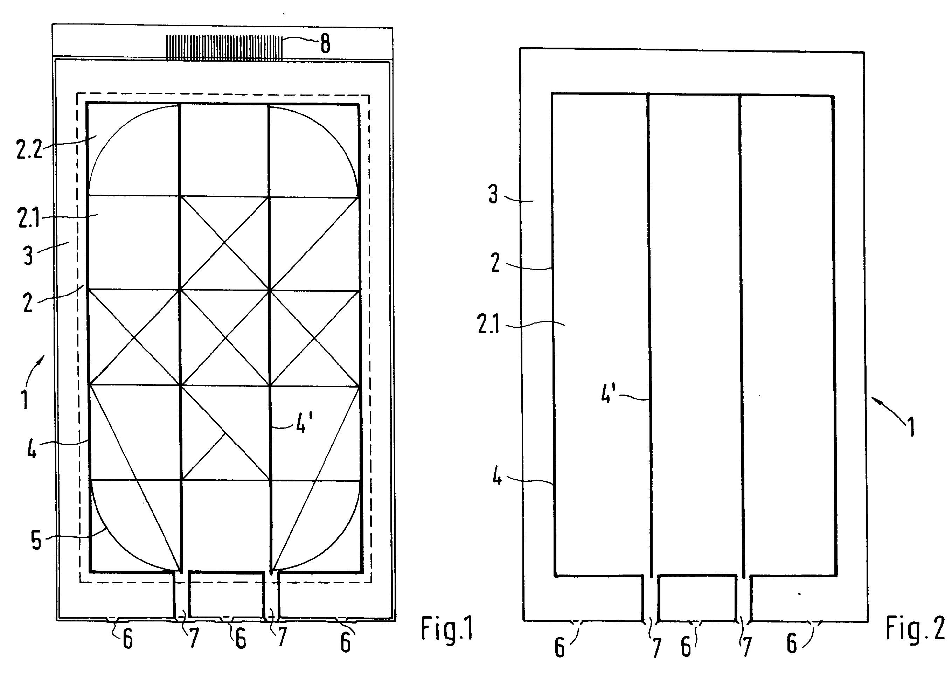

Fig. 1 zeigt eine Flüssigkristallanzeigevorrichtung 1 mit einer in mehrere Teilbereiche in Form von Spalten 2.1 unterteilten aktiven Zone 2, die von einem Umgebungsbereich 3 zur Außenbegrenzung mittels Kleberstreifen 4 zwischen beiderseitigen Substraten abgegrenzt ist. Die Spalten 2.1 sind im Inneren der aktiven Zone 2 zur Innenbegrenzung zwischen den beiderseitigen Substraten mittels weiterer Kleberstreifen 4' voneinander abgegrenzt. Auf den einander zugekehrten Seiten der beiderseitigen Substrate sind eine Vielzahl (vorliegend 38) segmentierte Flächenelektroden in Form von Segmenten 2.2 mittels dünner isolierender Trennlinien 5 gebildet, um einen in die aktive Zone 2 zwischen den Substraten über Einfüllöffnungen 7 eingefüllten Flüssigkristall in gewünschter Weise anzusteuern.

In Fig. 2 sind die zur Außenbegrenzung der aktiven Zone 2 dienenden Kleberstreifen 4 und die die Innenbegrenzung der Spalten 2.1 bildenden weiteren Kleberstreifen 4' zur Verdeutlichung ohne die Trennlinien 5 dargestellt. Um den Umgebungsbereich 3 zu entlüften, sind Entlüfungsöffnungen 6 vorgesehen.

Die Flüssigkristallanzeigevorrichtung 1 wird, wie an sich üblich, auf der Außenseite der Substrate mit Polarisationsfiltern abgedeckt, die für eine spannungslos helle Anzeige mit ihren Polarisationsrichtungen zueinander gekreuzt angeordnet sind. Zur Beobachtung aus einem gegenüber der Normalen schrägen Blickwinkel, insbesondere z.B. aus einem unteren Halbraum, wie es oft bei Betrachtung von Großanzeigen der Fall ist, werden entsprechende Maßnahmen wie bei dem eingangs genannten Stand der Technik (DE 37 82 915 A1 und US 4,952,030) ergriffen, d.h. insbesondere auch ein Flüssigkristall mit einem Verdrehwinkel < 90° eingesetzt.

Zum einfachen Einfüllen des Flüssigkristalls über die Einfüllöffnungen 7 sind die die Spalten 2.1 abgrenzenden weiteren Kleberstreifen 4' mit ihren einen Enden etwa mittig der Einfüllöffnung 7 angeordnet, so dass eine einfache Einfüllung des Flüssigkristalls in den Bereich der Spalten 2.1 und anschließend ein einfaches Verschließen ermöglicht werden.

Die Kleberstreifen 4 und die weiteren Kleberstreifen 4' werden mittels Kleberdruckes an den entsprechenden Stellen auf der Innenseite zwischen den beiden Substraten vor deren Zusammenfügen bei der Fertigung aufgebracht und bilden eine von außen schwarz erscheinende Maskierung für ansonsten hell erscheinende Stellen. Die Verklebung der beiden Substrate und die Maskierung werden also mit demselben Kleber in einem Fertigungsschritt mittels Kleberdruck aufgebracht. Dabei wird ausgenutzt, dass bei spannunslos hellen Anzeigen alle Bereiche, in denen sich kein Flüssigkristall befindet, schwarz erscheinen. Das gilt auch für die Bereiche, in denen sich der Kleber befindet.

Die nach außen führenden Zuleitungen aus transparentem leitfähigem Material (ITO) zu den einzelnen Segmenten 2.2 in der Zelle verlaufen in den Trennstreifen zwischen den Spalten 2.1 und in den Bereichen außerhalb der aktiven Zone 2. Die Kleberstreifen 4 und die weiteren Kleberstreifen 4' decken diese sonst hell erscheinenden Bereiche ab, so dass die Streifen schwarz erscheinen. Die Kleberstreifen 4 umschließen die aktive Zone 2 eng. Die Zuleitungen stellen eine Verbindung zwischen Anschlüssen 8 und den Segmenten 2.2 her. Die ätztechnisch erzeugten Trennlinien 5 zwischen den Segmenten 2.2 können sehr schmal gehalten werden (z.B. < 0,1 mm), so dass diese insbesondere bei Betrachtung der Anzeige aus üblicher größerer Entfernung nicht störend wirken.

Über die Entlüftungsöffnungen 6 wird der Umgebungsbereich 3 außerhalb der aktiven Zone 2 während der Fertigung entlüftet. Sie werden nach dem Aushärten des Klebers verschlossen.

Mit den beschriebenen Maßnahmen wird bei einfachem Aufbau eine stabile Flüssigkristallanzeigevorrichtung mit ungestörter Anzeige bei spannungslos heller Anzeige erhalten, die insbesondere auch für eine kontrastreiche schräge Beobachtung z.B. aus einem unteren Halbraum vorteilhaft ist.

## Patentansprüche

1. Flüssigkristallanzeigevorrichtung (1), die im spannungslosen Zustand hell ist, mit einer in einer aktiven Zone (2) zwischen Substraten eingebrachten Flüssigkristallschicht, wobei die Substrate außen jeweils mit in einer Anordnung für die spannungslos helle Anzeige ausgerichteten Polfiltern abgedeckt sind und auf ihrer Innenseite mit elektrisch isolierenden Trennlinien (5) voneinander getrennte Segmente (2.2) von Flächenelektroden tragen, die mit nach außen führenden Anschlussleitungen verbunden sind, und wobei auf der Substratinnenseite eine Maskierung für bei Dunkelsteuerung ansonsten hell bleibende Bereiche vorgesehen ist,
**dadurch gekennzeichnet,**
**dass** die aktive Zone (2) umfangsseitig mit schwarz erscheinenden Kleberstreifen (4) zwischen den Substraten umschlossen ist und
**dass** die Maskierung zumindest in ansonsten aus üblichem Betrachtungsabstand bei Dunkelsteuerung deutlich in Erscheinung tretenden Hellbereichen mittels weiterer Kleberstreifen (4') hergestellt ist.

2. Vorrichtung nach Anspruch 1,
**dadurch gekennzeichnet,**
**dass** die weiteren Kleberstreifen (4') zumindest im Bereich der Anschlussleitungen angeordnet sind.

3. Vorrichtung nach Anspruch 1 oder 2,
**dadurch gekennzeichnet,**
**dass** die aktive Zone (2) rechteckförmig ist oder quadratische Form besitzt und die weiteren Kleberstreifen (4') durchgehend parallel zu einer Außenseite in gleichen Abständen zum Bilden zeilenförmiger oder spaltenförmiger Teilbereiche (2.1) angeordnet sind.

4. Vorrichtung nach Anspruch 3,
**dadurch gekennzeichnet,**
**dass** mehrere Anschlussleitungen gemeinsam im Bereich der weiteren Kleberstreifen (4') geführt sind.

5. Vorrichtung nach Anspruch 3 oder 4,
**dadurch gekennzeichnet,**
**dass** die Zeilen oder Spalten (2.1) in mehrere quadratische oder rechteckförmige Untergruppen von Segmenten (2.2) mit jeweils mindestens einem Segment (2.2) unterteilt sind.

6. Vorrichtung nach Anspruch 5,
**dadurch gekennzeichnet,**
**dass** jedes Segment (2.2) an einen Kleberstreifen (4) oder weiteren Kleberstreifen (4'), die Anschlussleitungen abdecken, angrenzt.

7. Vorrichtung nach einem der Ansprüche 3 bis 6,
**dadurch gekennzeichnet,**
**dass** ein umfangsseitiger Kleberstreifen (4) zum Einfüllen des Flüssigkristalls im Bereich eines senkrecht darauf stoßenden Kleberstreifens (4') unterbrochen ist,
wobei eine so gebildete Einfüllöffnung (7) jeweils zu zwei nebeneinander liegenden Teilbereichen führt.
